(19)

**Europäisches Patentamt**
**European Patent Office**
**Office européen des brevets**

(11) **EP 4 660 923 A1**

(12) **EUROPEAN PATENT APPLICATION**

(43) Date of publication:
**10.12.2025 Bulletin 2025/50**

(21) Application number: **25180738.4**

(22) Date of filing: **04.06.2025**

(51) International Patent Classification (IPC):
**G06Q 30/0601** *(2023.01)*

(52) Cooperative Patent Classification (CPC):
**G06Q 30/0631**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.06.2024 US 202418737559**

(71) Applicant: **Microsoft Technology Licensing, LLC
Redmond, WA 98052-6399 (US)**

(72) Inventors:
- **Boué, Laurent**
  **Redmond, WA, 98052 (US)**
- **Rama, Kiran**
  **Redmond, WA, 98052 (US)**
- **Kondapalli, Ravi Prasad**
  **Redmond, WA, 98052 (US)**
- **Singh, Manpreet**
  **Redmond, WA, 98052 (US)**

(74) Representative: **Grünecker Patent- und
Rechtsanwälte
PartG mbB
Leopoldstraße 4
80802 München (DE)**

(54) **SYSTEM AND METHOD FOR SAMPLING CONTENT RECOMMENDATIONS USING A MULTI-ENTITY SURROGATE CONNECTIVITY GRAPH AND TELEMETRY DATA**

(57) A method, computer program product, and computing system for processing a plurality of content portions and a plurality of opportunities associated with a recommender system. A dynamic surrogate connectivity graph is generated using the plurality of content portions and the plurality of opportunities. Telemetry data associated with the recommender model is processed and a plurality of weighted path scores are modeled using the dynamic surrogate connectivity graph and the telemetry data. The plurality of weighted path scores are provided to the recommender model for generating subsequent recommendations.

FIG. 1

EP 4 660 923 A1

**Description**

*Background*

Recommender systems are an evolved field of machine learning where, given a particular input (i.e., a (user, content) tuple), the recommender system predicts a rating either through classification or regression. There are different methods, e.g., collaborative-filtering-based or hybrid systems based on whether they are built on side-information, similarity between users/items or using a combination of both. Recommender systems are often used as ranking systems where they provide a ranked list of items to be shown or recommended to a specific user. These are provided by the recommender systems in the decreasing order of their predicted values.

However, such conventional approaches to recommender systems are limited in efficacy as these recommender systems are built to minimize a loss function that would be in some form related to accuracy of the predictions. In a financial context, accurate predictions in many contexts might not be revenue-maximizing or margin-maximizing or both as they are conversion-maximizing. Additionally, recommender systems generally suffer a drawback in that they reinforce old patterns (e.g., a popular movie continues to be popular as it continues to be shown on top of the list). Further, it is generally undesirable to provide access to the internal or code base of a recommender system in order to modify recommendation weighting or sampling.

*Brief Description of the Drawings*

FIG. 1 is a flow chart of one implementation of a recommendation sampling process;

FIG. 2 is a diagrammatic view of the recommendation sampling process of FIG. 1;

FIG. 3 is a diagrammatic view of a dynamic surrogate connectivity graph generated using implementations of the recommendation sampling process of FIG. 1;

FIG. 4 is a diagrammatic view of an efficient frontier curve generated using implementations of the recommendation sampling process of FIG. 1; and

FIG. 5 is a diagrammatic view of computer system and the recommendation sampling process coupled to a distributed computing network.

Like reference symbols in the various drawings indicate like elements.

*Detailed Description of the Embodiments*

Implementations of the present disclosure enable sampling of recommendations from the "top-k" predictions of the recommender system, to explore and exploit from different paths/groups that these predictions might belong to. Specifically, mean-variance optimization, to determine the weights of the different paths. At run-time, the top-k predictions are provided to the user based on the weight scores of the different paths (i.e., a path representing a relationship between various entities associated with a recommendation (e.g., opportunity-to-content path, opportunity-to-opportunity path, content provider-to-content provider path, etc.) as defined in a dynamic surrogate connectivity graph of these entities).

As will be described in greater detail below, implementations of the present disclosure process a plurality of content portions and a plurality of opportunities associated with a recommender system. A dynamic surrogate connectivity graph is generated using the plurality of content portions and the plurality of opportunities. The dynamic surrogate connectivity graph is an approximate graph of the relationships between content portions, opportunities, and content providers responsive to changes in each of these relationships over time for a recommender system. Telemetry data associated with the recommender model (i.e., combination of opportunities, content portions recommended, and a user response to the recommended content portions) is processed and a plurality of weighted path scores are modeled using the dynamic surrogate connectivity graph and the telemetry data.

The plurality of weighted path scores are provided to the recommender model for generating subsequent recommendations. For example, the plurality of weighted path scores are weights to be applied to recommendations of different path types generated by a recommender system. Accordingly, implementations of the present disclosure determine an efficient frontier curve (i.e., a curve where each point on the curve represents an optimal combination of recommendations from different path types to maximize a particular opportunity or combination of opportunities) to maximize across different paths, treating each of the paths as "investments" and the overall gain as that of the "portfolio". Over time, these would change the labelling of the data that is used to train the underlying model(s), making the model(s) more aligned to the desired types and outcomes of recommendations as well changing user behaviors.

The recommendation sampling process 10 uses telemetry data from a "black box" base recommender model and cross-references its recommended content portions with an independently built dynamic graph data structure connecting multiple entities (e.g., content portions, sellers, opportunities, etc.). This allows for the collection of a dataset upon which the principles of mean-variance portfolio allocation theory are leveraged to discover the optimal combination of paths (exploration/exploitation, for example) for controllable performance of the recommender system. Accordingly, an output of the disclosure is to use this optimal allocation to sample from the recommendations made by the recommender system so that its performance is maximized while minimizing its variance.

The details of one or more implementations are set forth in the accompanying drawings and the description below. Other features and advantages will become apparent from the description, the drawings, and the claims.

## *The Recommendation Sampling Process:*

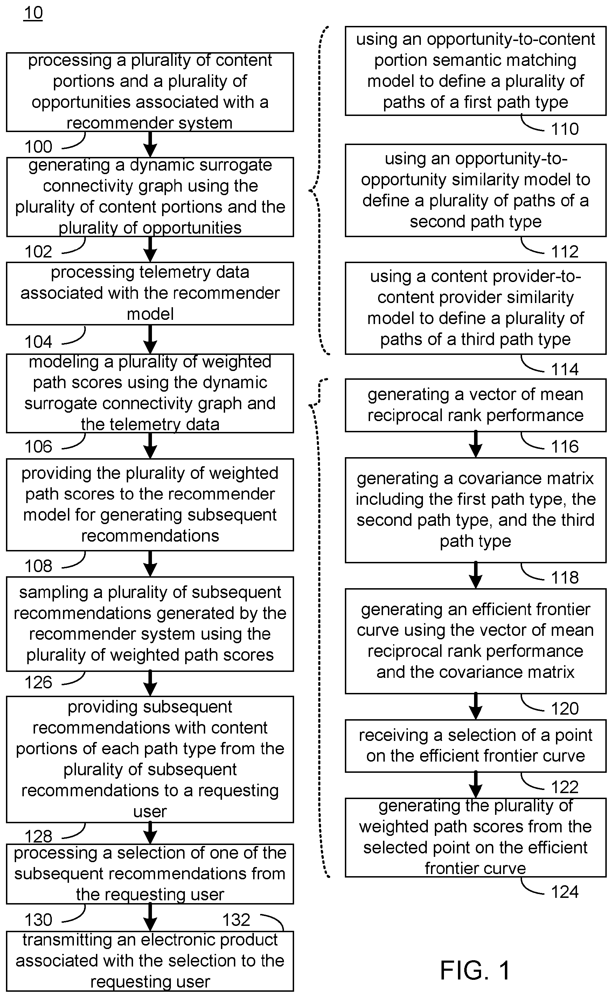

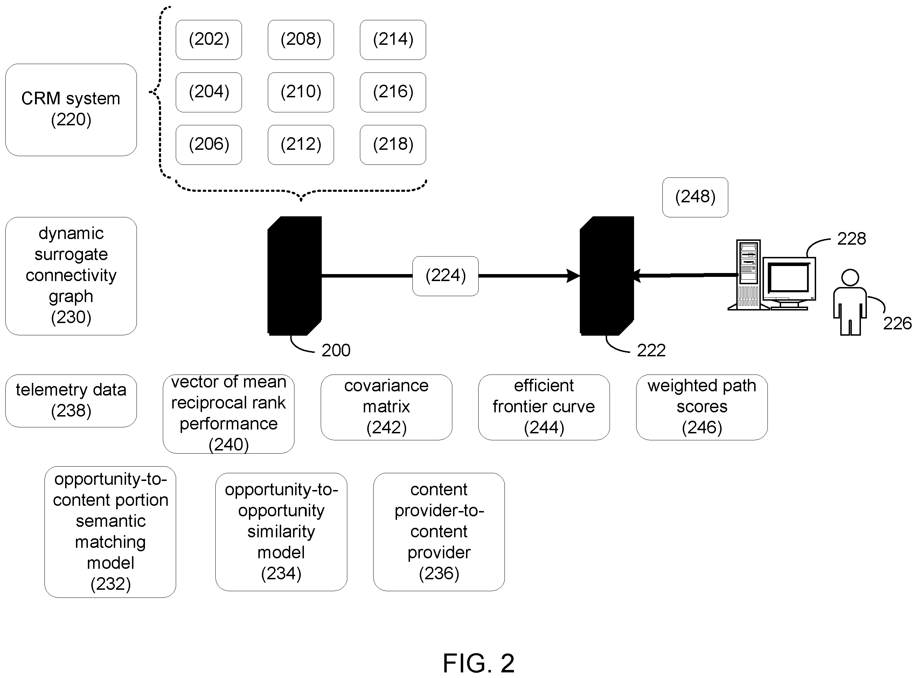

Referring to FIGS. 1-4, recommendation sampling process 10 processes 100 a plurality of content portions and a plurality of opportunities associated with a recommender system. A dynamic surrogate connectivity graph is generated 102 using the plurality of content portions and the plurality of opportunities. Telemetry data associated with the recommender model is processed 104 and a plurality of weighted path scores are modeled 106 using the dynamic surrogate connectivity graph and the telemetry data. The plurality of weighted path scores are provided 108 to the recommender model for generating subsequent recommendations.

In some implementations, recommendation sampling process 10 processes 100 a plurality of content portions and a plurality of opportunities associated with a recommender system. For example, a recommender system (e.g., recommender system 200) is a hardware and/or software component that processes content portions (e.g., content portions 202, 204, 206) from various content providers (e.g., content providers 208, 210, 212) and opportunities (e.g., opportunities 214, 216, 218) associated with the content portions to generate recommendations for the content portions using the opportunities and information associated with the recommendation. Content portions 202, 204, 206 include portions of documents or other information materials that are provided to users to encourage a particular action. Examples of content portions includes advertisements; testimonials; ratings; discounts; product or service manuals, videos, images, etc. Content providers 208, 210, 212 include sources of content portions (e.g., business entities, users, etc.). In some implementations, opportunities 214, 216, 218 include prospects with a threshold chance of user engagement with a target entity (i.e., user purchase of a product or service, user selection of a particular product or service, etc.). Examples of opportunities include opportunities to provide personalized communication for a product or service to a particular user, or set of users; loyalty programs for select users; cross-selling and upselling opportunities; etc. In some implementations, recommendation sampling process 10 processes 100 the plurality of content portions, content providers, and/or opportunities from a customer relationship management (CRM) system (e.g., CRM system 220). A CRM system is a hardware and/or software platform designed to help businesses manage and analyze interactions with current and potential customers. In one example, recommender system 200 may provide recommendations to users of an e-commerce platform (e.g., e-commerce platform 222) for various electronic products and/or services. As users interact with e-commerce platform 222, recommender system 200 (accessing e-commerce platform 222 with computing device 228) is engaged to generate recommendations (e.g., recommendations 224) for user 226 using content portions 202, 204, 206 based upon, at least in part, opportunities 214, 216, 218 associated with those content portions and the user.

While an example of an e-commerce platform has been described above, it will be appreciated that any type of platform and/or any application of a recommender system is within the scope of the present disclosure. Accordingly, it will be appreciated that recommender system 200 may, given an opportunity and/or other additional data sources / context, generate recommendations for content portions. In some implementations, these data sources may extend beyond the content portions, content providers, and opportunities described below. In this manner, recommendation sampling process 10 does not need to "know" or regulate other data sources / context that recommender system 200 uses in order to make recommendations. Those data sources can be wide-ranging in terms of context of information considered to make the recommendations. An exploration/exploitation tradeoff is not managed nor optimized by recommender system 200. Instead, it is only introduced to recommender system 200 via the data sources and context used to make its recommendations. Accordingly, recommendation sampling process 10 provides an approach that makes this tradeoff explicit and optimal in terms of recommendation performance.

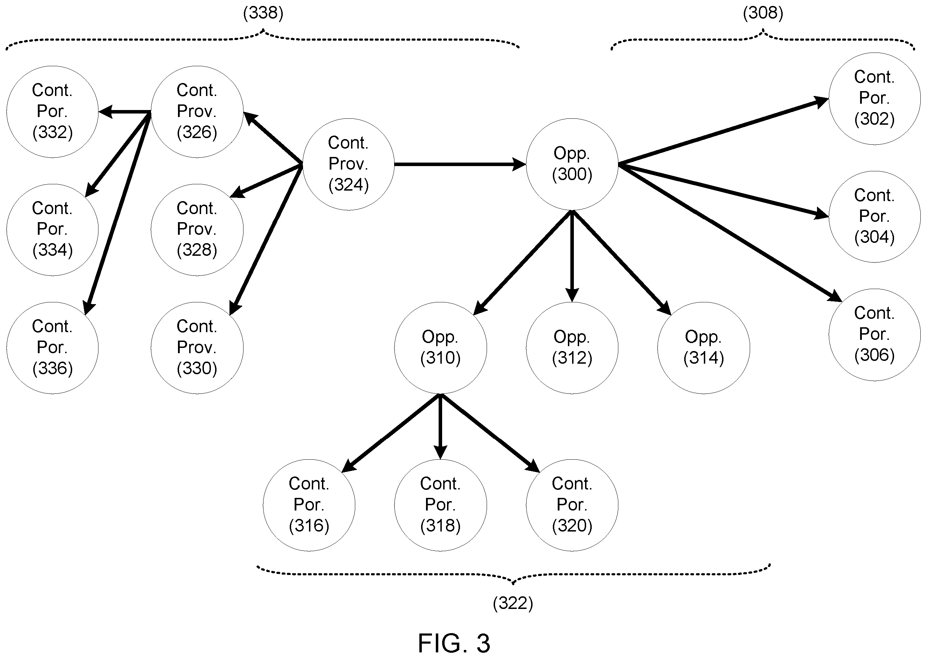

In some implementations, recommendation sampling process 10 generates 102 a dynamic surrogate connectivity graph using the plurality of content portions and the plurality of opportunities. A dynamic surrogate connectivity graph is an approximate graph of the relationships / paths between content portions, opportunities, and content providers responsive to changes in each of these relationships over time for a recommender system where the entities are represented as nodes and the paths between entities are represented as edges within the graph structure. For example and referring also to FIG. 3, recommendation sampling process 10 generates 102 dynamic surrogate connectivity graph 230 by processing the plurality of content portions and the plurality of opportunities using a plurality of semantic matching models (e.g., opportunity-to-content portion semantic matching model 232, opportunity-to-opportunity similarity model 234, and content provider-to-content provider 236). As shown in FIG. 3, recommendation sampling process 10 generates dynamic surrogate connectivity graph 230 (e.g., G(V, E)) by representing all the opportunities (e.g., opportunities 214, 216, 218), content providers (e.g., content providers 208, 210, 212), and content portions (e.g., content portions 202, 204, 206) as nodes V = { V_opportunities, V_content-providers, V_content-portions } of the graph. In some implementations, the content provider-opportunity edges are created based on information from CRM system 220 that details which opportunities (e.g., opportunities 214, 216, 218) are managed by each content provider (e.g., content providers 208, 210, 212).

In some implementations, recommendation sampling process 10 uses various auxiliary semantic matching models / similarity models to generate dynamic surrogate connectivity graph 230 using opportunities 214, 216, 218; content portions 202, 204, 206; and content providers 208, 210, 212 that are similar to each other. For example, similarity (as defined for these models) is based on the direct properties of the opportunities, the content providers, and the content portions. In some implementations, these auxiliary semantic matching / similarity models are pre-trained language models. For instance, given a target opportunity $o_i$ with features $o_i = [o_i\_1, o_i\_2, ... o_i\_n]$ and a content portion $d_i$ with features $d_j = [d_j\_1, d_j\_2, ... d_j\_n]$, the features are concatenated together into a textual representation which is then used as input to a pre-trained language model (e.g., ) to generate an embedding $e\_o_i$ for the opportunity and another embedding $e\_d_j$ for the content portion. The cosine-similarity $sim(e\_o_j, e\_d_j)$ between the opportunity and the content portion is used as a proxy score between -1 and 1 for their similarity. In some implementations, higher values indicate stronger similarities while lower values indicate weaker similarities. In some implementations, recommendation sampling process 10 creates embeddings for all content portions and compares their similarity to a target opportunity. This approach of generating embeddings and performing comparing for similarity can be used for comparing opportunities, content providers, and/or content portions to generate edges within dynamic surrogate connectivity graph 230.

In some implementations, generating 102 the dynamic surrogate connectivity graph includes using an opportunity-to-content portion semantic matching model to define 110 a plurality of paths of a first path type. For example and referring also to FIG. 3, recommendation sampling process 10 begins by selecting a random opportunity as a "target" starting opportunity (e.g., target opportunity 300). This opportunity is matched to content portion(s) using opportunity-to-content portion semantic matching model 232. For example, opportunity-to-content portion semantic matching model 232 generates 102 edges between content portions 302, 304, 306 and target opportunity 300 for all content portions for which the similarity score is higher than a pre-defined threshold (i.e., a user-defined threshold or a default threshold). In some implementations, opportunity-to-content portion semantic matching model uses properties of the opportunities and the content portions without taking into consideration any larger context (as recommender system 200 generally would). In some implementations, the edges between target opportunity 300 and matching content portion 302 are defined 110 as a first path type (e.g., first path type 308). In one example, the first path type is an opportunity-to-content portion path and may be interpreted as "exploitation".

In some implementations, generating 102 the dynamic surrogate connectivity graph includes using an opportunity-to-opportunity similarity model to define 112 a plurality of paths of a second path type. For example, recommendation sampling process 10 uses opportunity-to-opportunity similarity model 234 over all the other opportunities to identify which opportunities are most similar to this target opportunity. All opportunities for which their pairwise similarity with the target opportunity is higher than a pre-defined threshold (i.e., a user-defined threshold or a default threshold) are connected to the target opportunity via opportunity-opportunity edges. In the example of FIG. 3, recommendation sampling process 10 defines paths between target opportunity 300 and similar opportunities 310, 312, 314. Once those related opportunities have been identified, recommendation sampling process 10 uses opportunity-to-content portion semantic matching model 232 to identify similar content portions (e.g., content portions 316, 318, 320) to connect to these new "indirect" opportunities. Here "indirect" indicates that these opportunities for which recommendation sampling process 10 identifies semantically matching documents are different from the "target" opportunity. The edges between the target opportunity and the content portions identified from similar opportunities are defined 112 as a second path type (e.g., second path type 322). In one example, the second path type is an opportunity-to-opportunity path and may be interpreted as "exploration" given the indirect edges.

In some implementations, generating 102 the dynamic surrogate connectivity graph includes a third path type using a content provider-to-content provider similarity model to define 114 a plurality of paths of a third path type. For example, recommendation sampling process 10 uses content provider-to-content provider similarity model 236 to identify which content providers are most similar to the content provider (e.g., content provider 324) that the target opportunity (e.g., opportunity 300) is associated with. In some implementations, the number of and/or sufficient similarity of other content providers is determined by a pre-defined threshold (i.e., a user-defined threshold or a default threshold). For each similar content provider (e.g., content providers 326, 328, 330), recommendation sampling process 10 identifies opportunities associated with the similar content provider(s) and uses opportunity-to-content portion semantic matching model 232 to identify content portions (e.g., content portions 332, 334, 336) to connect to the similar opportunities with edges. In some implementations, the edges between the similar opportunities and matching content portions are defined 114 as a third path type (e.g., third path type 338).

In some implementations, recommendation sampling process 10 repeats the above-described defining of the first path type, the second path type, and the third path type for every other target opportunity from the plurality of opportunities of recommender system 200. The dynamic surrogate connectivity graph G(V,E) is completed once all identified opportunities have been considered. In some implementations, the dynamic surrogate connectivity graph G(V,E) is updated every time there is a change to the properties of the nodes (i.e., opportunities, content portions, and/or content providers) which in turn updates the graph edges. In one example, changes to the opportunities, content portions, and/or content providers are provided by CRM system 220.

In some implementations, recommendation sampling process 10 processes 104 telemetry data associated with the recommender model. Telemetry data (e.g., telemetry data 238) includes a combination of opportunities, content portions recommended by recommender system 200 for the opportunities, and a user response to the recommended content portions. In some implementations, recommendation sampling process 10 uses dynamic surrogate connectivity graph and recommender system 200 to build a telemetry dataset (e.g., telemetry data 238). For example, consider normal operation of recommender system 200 and assume that a specific content provider is looking at a specific opportunity. At this point, recommender system 200 is invoked and fetches the required external data sources /context, and responds with the recommended content portions $[d_1, d_2, ...]$ for that opportunity. If a user selects or otherwise engages one of these recommended content portions, recommendation sampling process 10 denotes this as "d_select" and by determining its reciprocal rank (RR) as shown below in Equation 1:

$$(1) \qquad RR(d\_select) = 1 / rank(d\_select)$$

With Equation 1, it will be appreciated that if the clicked content portion appears among the first few recommendations, its RR(d_select) will be higher than if it appears among the last ones. Once a content portion has been engaged with (e.g., clicked on) by the user, its position within dynamic surrogate connectivity graph 230 is located and its relationship (e.g., p_d_select) with the target opportunity, (e.g., a first path type, a second path type, and/or a third path type) is determined. Recommendation sampling process 10 combines the user engagement (e.g., d_select), the path within dynamic surrogate connectivity graph 230 associated with the content portion engaged by the user (e.g., p_d_select), and its reciprocal rank (e.g., RR(d_select)) to define a single telemetry data record.

Recommendation sampling process 10 generates a table of telemetry data by processing more records with the following schema: content portion engaged with, path of the selected content portion, reciprocal rank of the selected content portion. An example of this is shown below in Table 1:

*Table 1*

| d_select | p_d_select | RR(d_select) |
|---|---|---|
| ... | ... | ... |
| ... | ... | ... |
| | | |

As shown in Table 1, note that the same selected content portion (e.g., d_select) appears in multiple rows with different path values for p_d_select and different reciprocal ranks RR(d_select).

In some implementations, recommendation sampling process 10 models 106 a plurality of weighted path scores using the dynamic surrogate connectivity graph and the telemetry data. For example, once the telemetry table (e.g., Table 1 shown above) has been generated with enough records (e.g., hundreds, thousands, or a pre-defined threshold number of records), recommendation sampling process 10 models 106 a plurality of weighted path scores by evaluating the performance of each path p_d_select = $\{p_1, p_2, p_3\}$. In some implementations, recommendation sampling process 10 groups the raw telemetry table simultaneously both by its first column d_select and by its second column p_d_select. For example, recommendation sampling process 10 generates a list of sub-tables indexed by (d_select, p_d_select) for which recommendation sampling process 10 can evaluate the average reciprocal rank for that specific combination of selected content portion and connectivity graph path. Unstacking the results into a table leads to a new table with the following schema: d_select, $p_1$, $p_2$, $p_3$, where each $p_i$ column is populated with the average reciprocal rank of path $p_i$ for all the documents as shown below in Table 2:

*Table 2*

| d_select | $p_1$ | $p_2$ | $p_3$ |
|---|---|---|---|
| $d_1$ | <RR($d_1$)>_$p_1$ | <RR($d_1$)>_$p_2$ | <RR($d_1$)>_$p_3$ |
| $d_2$ | <RR($d_2$)>_$p_1$ | <RR($d_2$)>_$p_2$ | <RR($d_2$)>_$p_3$ |
| $d_3$ | <RR($d_3$)>_$p_1$ | <RR($d_3$)>_$p_2$ | <RR($d_3$)>_$p_3$ |

(continued)

| d_select | $p_1$ | $p_2$ | $p_3$ |
|---|---|---|---|
| ... | ... | ... | ... |

Note that in Table 2, the column of selected content portions contains only unique content portions.

In some implementations, modeling 106 the plurality of weighted path scores includes: generating 116 a vector of mean reciprocal rank performance; and generating 118 a covariance matrix including the first path type, the second path type, and the third path type. For example, recommendation sampling process 10 generates two quantities using this processed telemetry table, a vector of mean reciprocal rank performance denoted as "mu" and a covariance matrix between the different paths denoted below as "Sigma". In some implementations, recommendation sampling process 10 generates 116 a vector of mean reciprocal rank (e.g., vector of mean reciprocal rank 240) representing the average reciprocal rank for each path over all content portions in the d_select column. An example of how this vector is generated is shown below in Equation 2:

$$mu = [E\_p_1, E\_p_2, E\_p_3], \text{ where } E\_p_i = sum(<RR(d\_k)>\_p_i, \{k, 1, \text{all content portions}\})/\text{total number of content portions} \tag{2}$$

In some implementations, recommendation sampling process 10 generates 118 a covariance matrix (e.g., covariance matrix 242) between the different path types that measures the degree of pairwise correlation between the different paths. An example of how this covariance matrix is generated is shown below in Equation 3:

$$Sigma\_ij = sum [ (<RR(d\_k)>\_pi - E\_pi) \times (<RR(d\_k)>\_pj - E\_pj), k, 1, \text{all content portions}]/\text{total number of content portions} \tag{3}$$

An example of covariance matrix 242 is shown below in Table 3, where Sigma_ij represents the degree of correlation between path "i" and path "j":

*Table 3*

| Sigma_11 | Sigma_21 | Sigma_31 |
|---|---|---|
| Sigma_21 | Sigma_22 | Sigma_23 |
| Sigma_31 | Sigma_23 | Sigma_33 |

In some implementations, modeling 106 the plurality of weighted path scores includes: generating 120 an efficient frontier curve using the vector of mean reciprocal rank performance and the covariance matrix; receiving 122 a selection of a point on the efficient frontier curve; and generating 124 the plurality of weighted path scores from the selected point on the efficient frontier curve. With the table of processed telemetry data (e.g., Table 2), vector of mean reciprocal rank performance 240, and covariance matrix 242 extracted from the processed telemetry data table, recommendation sampling process 10 determines the optimal allocation to give to each of the different path types (e.g., $p_1$, $p_2$, $p_3$). For determining the optimal allocation and using an analogy from a financial portfolio, each content portion (e.g., $d_j$) may be a "timestamp", each path (e.g., $p_i$) may be an "asset", and the reciprocal rank$(d_j)\_p_i$ may be the "return" on the asset $p_i$ for the content portion $d_j$.

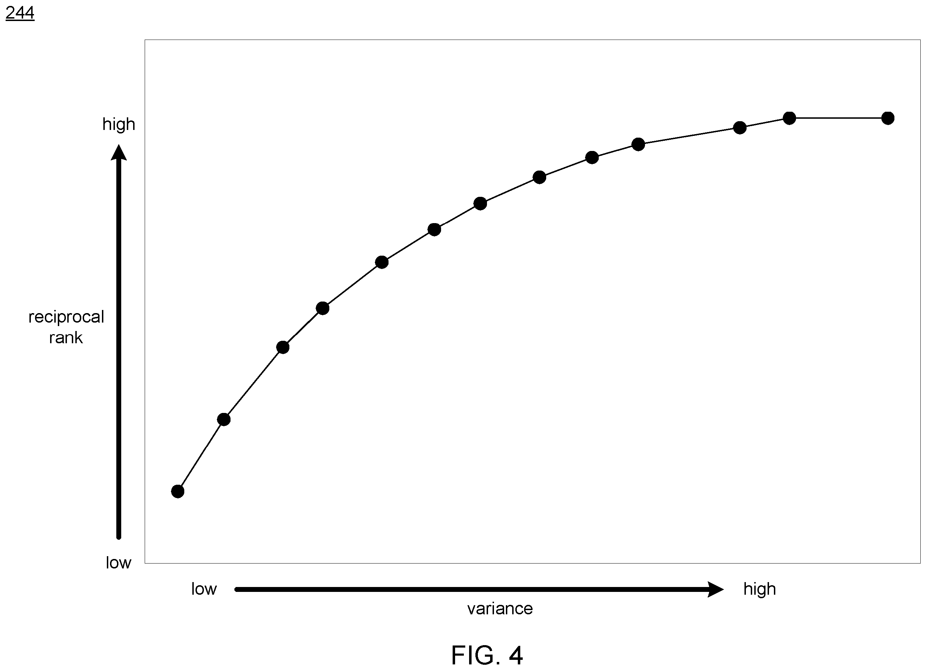

Traditionally, optimal performance is defined so as to maximize "returns" while minimizing the variance (although other definitions may be used (e.g., Sharpe ratio, tangent portfolio, etc.)). For the sake of generality, given vector of mean reciprocal rank 240 and covariance matrix 242, recommendation sampling process 10 generates 120 an efficient frontier curve as illustrated in FIG. 4. An efficient frontier curve is a curve where each point on the curve represents an optimal combination of recommendations from different path types to maximize a particular opportunity or combination of opportunities. In some implementations, recommendation sampling process 10 generates 120 efficient frontier curve 244 by generating points using values from vector of mean reciprocal rank performance 240 and values from covariance matrix 242. In one example and as shown in FIG. 4, efficient frontier curve 244 is plotted with a y-axis representing the reciprocal rank of a path for a given content portion and an x-axis representing the variance of the reciprocal ranks.

In response to generating 120 efficient frontier curve 244, recommendation sampling process 10 receives 122 a user selection of a point on efficient frontier curve 244 where the user may decide on a tradeoff preference between higher performance (i.e., in terms of reciprocal rank of the recommendations) and the associated variance. For example, suppose that a user decides on a specific value of performance. In this example, recommendation sampling process 10 receives a selection of a point on efficient frontier curve 244 that represents the user-selected tradeoff. In another example, recommendation sampling process 10 converts a user-selection of a tradeoff between performance and variance into a point on efficient frontier curve 244.

In some implementations, recommendation sampling process 10 generates 124 the plurality of weighted path scores (e.g., weighted path scores 246) from the selected point on the efficient frontier curve. For example, the efficient frontier indicates the combination of weight path scores as shown below in Equation 4 to assign to each one of the paths $(p_1, p_2, p_3)$ so that this reciprocal rank performance will be achieved with minimum variance:

$$(4) \qquad w\_opt = (w_1\_opt, w_2\_opt, w_3\_opt), \text{ where } w_1 + w_2 + w_3 = 1$$

It will be appreciated that additional constraints, other than all the weight coefficients summing up to 1, may also be applied (e.g., $w_i$ must be greater than or less than some threshold) when generating 124 weighted path scores 246.

In some implementations, recommendation sampling process 10 provides 108 the plurality of weighted path scores to the recommender model for generating subsequent recommendations. For example, given a user-selected tradeoff on efficient frontier curve 244, recommendation sampling process 10 generates an optimal combination of weights w_opt to assign to each one of the paths $(p_1, p_2, p_3)$ and provides these to recommender system 200 for weighting paths for subsequent recommendations.

In some implementations, recommendation sampling process 10 samples 126 a plurality of subsequent recommendations generated by the recommender system using the plurality of weighted path scores by determining a number of content portions to provide for each path type by multiplying a total number of subsequent recommendations with the plurality of weighted path scores. For example, recommendation sampling process 10 provides a way to sample from the recommendations made by recommender system 200 so that the proportions of recommendations form an ideal combination of weights $(w_1\_opt, w_2\_opt, w_3\_opt)$ for paths $p_1, p_2, p_3$ so that the performance of recommender system 200 (i.e., in terms of reciprocal rank of the recommendations) is maximized while minimizing its variance. As discussed above, this combination leads to recommendations from recommender system 200 with minimal variance for a user-selected point in efficient frontier curve 244 indicative of the performance of the recommendations without modifying recommender system 200 directly. In some implementations and given a target opportunity, the recommender system 200 generates a recommendation score for all content portions (e.g., content portions 202, 204, 206). As recommendation sampling process 10 is continuously updating dynamic surrogate connectivity graph 230, the recommendations can be assigned a path (e.g., among $p_1, p_2, p_3$) by identifying the content portions in dynamic surrogate connectivity graph 230.

In one example, suppose recommender system 200 provides "k" content portions with recommendation scores for each content portion. Instead of choosing the "top-k" content portions by simple top-to-bottom ranking, as the recommendations made by recommender system 200 would normally be provided, recommendation sampling process 10 identifies a predefined number of content portions associated with each path type (i.e., a predefined number of content portions from path $p_i$). In one example, the predefined number of content portions is a user-defined value. In another example, the predefined number of content portions is determined by multiplying $w_i$ by k from path $p_i$.

Suppose recommendation sampling process 10 receives ten recommendations and further suppose that recommendation sampling process 10 models 106 weight path scores for three different path types (i.e., w_opt = (0.2, 0.5, 0.3)). In some implementations, recommendation sampling process 10 determines a number of content portions to provide for each path type by multiplying a total number of subsequent recommendations with weighted path scores 246. In this example, recommendation sampling process 10 determines that two content portions should come from the first path type by multiplying the ten subsequent recommendations by the 0.2 weight path score for the first path type; determines that five content portions should come from the second path type by multiplying the ten subsequent recommendations by the 0.5 weight path score for the second path type; and determines that the remaining three content portions should come from the third path type by multiplying the ten subsequent recommendations by the 0.3 weight path score for the third path type. In some implementations, recommendation sampling process 10 processes the subsequent recommendations made by recommender system 200 and selects content portions from top to bottom to match the determined content portion weighting. In some implementations, these weights indicate that even if a recommended content portion from one path type $(p_i)$ is recommended higher than that of another path type $(p_i)$ but recommendation sampling process 10 has already selected the required number of content portions from path $p_i$, then those content portions are ignored in favor of others (maybe lower ranked) from another path type which has not yet been filled to its optimal quota defined by weighted path scores 246.

Accordingly, this proportional sampling of recommendations from recommender system 200 ensures that the number of content portions coming from each path type are in the correct proportions consistent with the mean-variance analysis discussed above using vector of mean reciprocal rank performance 240 and covariance matrix 242. In this manner, recommendation sampling process 10 does not modify recommender system 200 but instead samples from its recommendations so that the overall proportions of recommended content portions are in optimal/efficient proportions with each other to ensure maximal performance.

In some implementations, recommendation sampling process 10 provides 128 subsequent recommendations with content portions of each path type from the plurality of subsequent recommendations to a requesting user based upon, at least in part, the number of content portions for each path type. For example, using the number of content portions for each path type determined by multiplying the weighted path scores by the total number of subsequent recommendations. In the above example, recommendation sampling process 10 provides 128 subsequent recommendations for two content portions from the first path type, five content portions from the second path type, and three content portions from the third path type to a requesting user (i.e., a user (e.g., user 226) that provides a query to recommender system 200 and/or that accesses e-commerce platform 222 on which content portions are recommended.

In some implementations, recommendation sampling process 10 processes 130 a selection of one of the subsequent recommendations from the requesting user; and transmits 132 an electronic product associated with the selection to the requesting user. For example, a user accessing the e-commerce platform. For example, in response to providing 128 the recommendation(s) to user 226, recommendation sampling process 10 receives and processes 130 a selection of one of the recommendations. In one example, where the recommendation is for an electronic product (e.g., electronic product 248) (i.e., a software application, a subscription to a software application, permission to access a hardware and/or software system that is electronically transmittable), recommendation sampling process 10 transmits 132 the electronic product (or access thereto) to user 226. In another example, where the recommendation is for a non-electronic product (i.e., a product that is not electronically transmittable), recommendation sampling process 10 provides information user 226 with the ability to obtain the non-electronic product from the source of the non-electronic product.

*System Overview:*

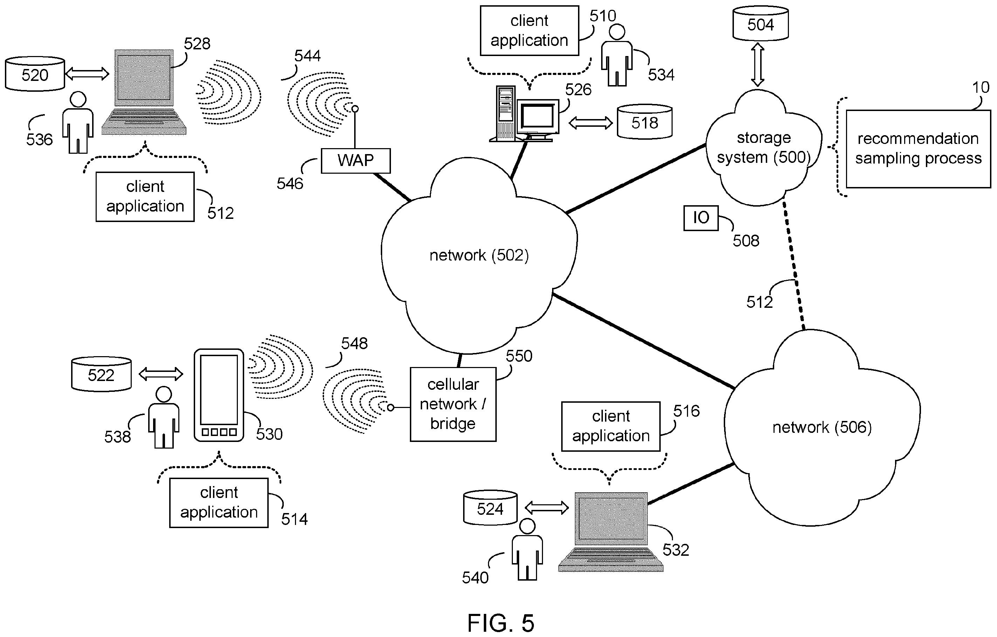

Referring to FIG. 5, a recommendation sampling process 10 is shown to reside on and is executed by storage system 500, which is connected to network 502 (e.g., the Internet or a local area network). Examples of storage system 500 include: a Network Attached Storage (NAS) system, a Storage Area Network (SAN), a personal computer with a memory system, a server computer with a memory system, and a cloud-based device with a memory system. A SAN includes one or more of a personal computer, a server computer, a series of server computers, a minicomputer, a mainframe computer, a RAID device, and a NAS system.

The various components of storage system 500 execute one or more operating systems, examples of which include: Microsoft® Windows®; Mac® OS X®; Red Hat® Linux®, Windows® Mobile, Chrome OS, Blackberry OS, Fire OS, or a custom operating system (Microsoft and Windows are registered trademarks of Microsoft Corporation in the United States, other countries or both; Mac and OS X are registered trademarks of Apple Inc. in the United States, other countries or both; Red Hat is a registered trademark of Red Hat Corporation in the United States, other countries or both; and Linux is a registered trademark of Linus Torvalds in the United States, other countries or both).

The instruction sets and subroutines of recommendation sampling process 10, which are stored on storage device 504 included within storage system 500, are executed by one or more processors (not shown) and one or more memory architectures (not shown) included within storage system 500. Storage device 504 may include: a hard disk drive; an optical drive; a RAID device; a random-access memory (RAM); a read-only memory (ROM); and all forms of flash memory storage devices. Additionally or alternatively, some portions of the instruction sets and subroutines of recommendation sampling process 10 are stored on storage devices (and/or executed by processors and memory architectures) that are external to storage system 500.

In some implementations, network 502 is connected to one or more secondary networks (e.g., network 506), examples of which include: a local area network; a wide area network; or an intranet.

Various input / output (IO) requests (e.g., IO request 508) are sent from client applications 510, 512, 514, 516 to storage system 500. Examples of IO request 508 include data write requests (e.g., a request that content be written to storage system 500) and data read requests (e.g., a request that content be read from storage system 500).

The instruction sets and subroutines of client applications 510, 512, 514, 516, which may be stored on storage devices 518, 520, 522, 524 (respectively) coupled to client electronic devices 526, 528, 530, 532 (respectively), may be executed by one or more processors (not shown) and one or more memory architectures (not shown) incorporated into client electronic devices 526, 528, 530, 532 (respectively). Storage devices 518, 520, 522, 524 may include: hard disk drives; tape drives; optical drives; RAID devices; random access memories (RAM); read-only memories (ROM), and all forms of flash memory storage devices. Examples of client electronic devices 526, 528, 530, 532 include personal computer 526, laptop computer 528, smartphone 530, laptop computer 532, a server (not shown), a data-enabled, and a dedicated network device (not shown). Client electronic devices 526, 528, 530, 532 each execute an operating system.

Users 534, 536, 538, 540 may access storage system 500 directly through network 502 or through secondary network 506. Further, storage system 500 may be connected to network 502 through secondary network 506, as illustrated with link line 542.

The various client electronic devices may be directly or indirectly coupled to network 502 (or network 506). For example, personal computer 526 is shown directly coupled to network 502 via a hardwired network connection. Further, laptop computer 532 is shown directly coupled to network 506 via a hardwired network connection. Laptop computer 528 is shown wirelessly coupled to network 502 via wireless communication channel 544 established between laptop computer 528 and wireless access point (e.g., WAP) 546, which is shown directly coupled to network 502. WAP 546 may be, for example, an IEEE 802.11a, 802.11b, 802.11g, 802.11n, Wi-Fi®, and/or Bluetooth® device that is capable of establishing a wireless communication channel 544 between laptop computer 528 and WAP 546. Smartphone 530 is shown wirelessly coupled to network 502 via wireless communication channel 548 established between smartphone 530 and cellular network / bridge 550, which is shown directly coupled to network 502.

*General:*

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

A number of implementations have been described. Having thus described the disclosure of the present application in detail and by reference to embodiments thereof, it will be apparent that modifications and variations are possible without departing from the scope of the disclosure defined in the appended claims.

**The following is a list of further preferred embodiments of the invention:**

Embodiment 1. A computer-implemented method, executed on a computing device, comprising:

processing a plurality of content portions and a plurality of opportunities associated with a recommender system;

generating a dynamic surrogate connectivity graph using the plurality of content portions and the plurality of opportunities;
processing telemetry data associated with the recommender model;

modeling a plurality of weighted path scores using the dynamic surrogate connectivity graph and the telemetry data; and
providing the plurality of weighted path scores to the recommender model for generating subsequent recommendations.

Embodiment 2. The computer-implemented method of embodiment 1, further comprising:
sampling a plurality of subsequent recommendations generated by the recommender system using the plurality of weighted path scores by determining a number of content portions to provide for each path type by multiplying a total number of subsequent recommendations with the plurality of weighted path scores.
Embodiment 3. The computer-implemented method of embodiment 2, further comprising:

providing subsequent recommendations with content portions of each path type from the plurality of subsequent recommendations to a requesting user based upon, at least in part, the number of content portions for each path type;
processing a selection of one of the subsequent recommendations from the requesting user; and
transmitting an electronic product associated with the selection to the requesting user.

Embodiment 4. The computer-implemented method of embodiment 1, wherein generating the dynamic surrogate connectivity graph includes using an opportunity-to-content portion semantic matching model to define a plurality of paths of a first path type.

Embodiment 5. The computer-implemented method of embodiment 4, wherein generating the dynamic surrogate connectivity graph includes using an opportunity-to-opportunity similarity model to define a plurality of paths of a second path type.

Embodiment 6. The computer-implemented method of embodiment 5, wherein generating the dynamic surrogate connectivity graph includes a third path type using a content provider-to-content provider similarity model to define a plurality of paths of a third path type.

Embodiment 7. The computer-implemented method of embodiment 6, wherein modeling the plurality of weighted path scores includes:

> generating a vector of mean reciprocal rank performance; and
> generating a covariance matrix including the first path type, the second path type, and the third path type.

Embodiment 8. The computer-implemented method of embodiment 7, wherein modeling the plurality of weighted path scores includes:

> generating an efficient frontier curve using the vector of mean reciprocal rank performance and the covariance matrix;
> receiving a selection of a point on the efficient frontier curve; and
> generating the plurality of weighted path scores from the selected point on the efficient frontier curve.

Embodiment 9. A computing system comprising:

> a memory; and
> a processor configured to: process a plurality of content portions, a plurality of opportunities, and a plurality of content providers associated with a recommender system, to generate a dynamic surrogate connectivity graph using the plurality of content portions, the plurality of opportunities, and the plurality of content providers, to process telemetry data associated with the recommender model, to model a plurality of weighted path scores using the dynamic surrogate connectivity graph and the telemetry data, and to provide the plurality of weighted path scores to the recommender model for generating subsequent recommendations.

Embodiment 10. The computing system of embodiment 9, wherein generating the dynamic surrogate connectivity graph includes using an opportunity-to-content portion semantic matching model to define a plurality of paths of a first path type.

Embodiment 11. The computing system of embodiment 10, wherein generating the dynamic surrogate connectivity graph includes using an opportunity-to-opportunity similarity model to define a plurality of paths of a second path type.

Embodiment 12. The computing system of embodiment 11, wherein generating the dynamic surrogate connectivity graph includes a third path type using a content provider-to-content provider similarity model to define a plurality of paths of a third path type.

Embodiment 13. The computing system of embodiment 12, wherein modeling the plurality of weighted path scores includes:

> generating a vector of mean reciprocal rank performance; and
> generating a covariance matrix including the first path type, the second path type, and the third path type.

Embodiment 14. The computing system of embodiment 13, wherein modeling the plurality of weighted path scores includes:

> generating an efficient frontier curve using the vector of mean reciprocal rank performance and the covariance matrix;
> receiving a selection of a point on the efficient frontier curve; and
> generating the plurality of weighted path scores from the selected point on the efficient frontier curve.

Embodiment 15. The computing system of embodiment 14, wherein the processor is further configured to: sample a plurality of subsequent recommendations generated by the recommender system using the plurality of weighted path scores by determining a number of content portions to provide for each path type by multiplying a total number of subsequent recommendations with the plurality of weighted path scores.

Embodiment 16. The computing system of embodiment 15, wherein the processor is further configured to:

provide subsequent recommendations with content portions of each path type from the plurality of subsequent recommendations to a requesting user based upon, at least in part, the number of content portions for each path type;

process a selection of one of the subsequent recommendations from the requesting user; and

transmit an electronic product associated with the selection to the requesting user.

Embodiment 17. A computer program product residing on a non-transitory computer readable medium having a plurality of instructions stored thereon which, when executed by a processor, cause the processor to perform operations comprising:

processing a plurality of content portions and a plurality of opportunities associated with a recommender system;

generating a dynamic surrogate connectivity graph using the plurality of content portions and the plurality of opportunities;

processing telemetry data associated with the recommender model;

modeling a plurality of weighted path scores using the dynamic surrogate connectivity graph and the telemetry data;

providing the plurality of weighted path scores to the recommender model for generating subsequent recommendations;

sampling a plurality of subsequent recommendations generated by the recommender system using the plurality of weighted path scores by determining a number of content portions to provide for each path type by multiplying a total number of subsequent recommendations with the plurality of weighted path scores;

providing subsequent recommendations with content portions of each path type from the plurality of subsequent recommendations to a requesting user based upon, at least in part, the number of content portions for each path type;

processing a selection of one of the subsequent recommendations from the requesting user; and

transmitting an electronic product associated with the selection to the requesting user.

Embodiment 18. The computer program product of embodiment 17, wherein generating the dynamic surrogate connectivity graph includes using an opportunity-to-content portion semantic matching model to define a plurality of paths of a first path type.

Embodiment 19. The computer program product of embodiment 18, generating the dynamic surrogate connectivity graph includes using an opportunity-to-opportunity similarity model to define a plurality of paths of a second path type.

Embodiment 20. The computer program product of embodiment 19, wherein generating the dynamic surrogate connectivity graph includes a third path type using a content provider-to-content provider similarity model to define a plurality of paths of a third path type.

## Claims

1. A computer-implemented method, executed on a computing device, comprising:

    processing a plurality of content portions and a plurality of opportunities associated with a recommender system;

    generating a dynamic surrogate connectivity graph using the plurality of content portions and the plurality of opportunities;

    processing telemetry data associated with the recommender model;

    modeling a plurality of weighted path scores using the dynamic surrogate connectivity graph and the telemetry data; and

    providing the plurality of weighted path scores to the recommender model for generating subsequent recommendations.

2. The computer-implemented method of claim 1, further comprising:
    sampling a plurality of subsequent recommendations generated by the recommender system using the plurality of weighted path scores by determining a number of content portions to provide for each path type by multiplying a total number of subsequent recommendations with the plurality of weighted path scores.

3. The computer-implemented method of claim 2, further comprising:

    providing subsequent recommendations with content portions of each path type from the plurality of subsequent recommendations to a requesting user based upon, at least in part, the number of content portions for each path type;

processing a selection of one of the subsequent recommendations from the requesting user; and

transmitting an electronic product associated with the selection to the requesting user.

4. The computer-implemented method of one of claims 1 to 3, wherein generating the dynamic surrogate connectivity graph includes using an opportunity-to-content portion semantic matching model to define a plurality of paths of a first path type.

5. The computer-implemented method of claim 4, wherein generating the dynamic surrogate connectivity graph includes using an opportunity-to-opportunity similarity model to define a plurality of paths of a second path type.

6. The computer-implemented method of claim 5, wherein generating the dynamic surrogate connectivity graph includes a third path type using a content provider-to-content provider similarity model to define a plurality of paths of a third path type.

7. The computer-implemented method of claim 6, wherein modeling the plurality of weighted path scores includes:

generating a vector of mean reciprocal rank performance; and

generating a covariance matrix including the first path type, the second path type, and the third path type, wherein preferably modeling the plurality of weighted path scores includes:

generating an efficient frontier curve using the vector of mean reciprocal rank performance and the covariance matrix;

receiving a selection of a point on the efficient frontier curve; and

generating the plurality of weighted path scores from the selected point on the efficient frontier curve.

8. A computing system comprising:

a memory; and

a processor configured to: process a plurality of content portions, a plurality of opportunities, and a plurality of content providers associated with a recommender system, to generate a dynamic surrogate connectivity graph using the plurality of content portions, the plurality of opportunities, and the plurality of content providers, to process telemetry data associated with the recommender model, to model a plurality of weighted path scores using the dynamic surrogate connectivity graph and the telemetry data, and to provide the plurality of weighted path scores to the recommender model for generating subsequent recommendations.

9. The computing system of claim 8, wherein generating the dynamic surrogate connectivity graph includes using an opportunity-to-content portion semantic matching model to define a plurality of paths of a first path type.

10. The computing system of claim 9, wherein generating the dynamic surrogate connectivity graph includes using an opportunity-to-opportunity similarity model to define a plurality of paths of a second path type.

11. The computing system of claim 10, wherein generating the dynamic surrogate connectivity graph includes a third path type using a content provider-to-content provider similarity model to define a plurality of paths of a third path type.

12. The computing system of claim 11, wherein modeling the plurality of weighted path scores includes:

generating a vector of mean reciprocal rank performance; and

generating a covariance matrix including the first path type, the second path type, and the third path type.

13. The computing system of claim 12, wherein modeling the plurality of weighted path scores includes:

generating an efficient frontier curve using the vector of mean reciprocal rank performance and the covariance matrix;

receiving a selection of a point on the efficient frontier curve; and

generating the plurality of weighted path scores from the selected point on the efficient frontier curve, wherein the processor preferably is further configured to:

sample a plurality of subsequent recommendations generated by the recommender system using the plurality of weighted path scores by determining a number of content portions to provide for each path type by multiplying a total number of subsequent recommendations with the plurality of weighted path scores, and wherein the processor preferably is further configured to:

provide subsequent recommendations with content portions of each path type from the plurality of subsequent recommendations to a requesting user based upon, at least in part, the number of content portions for each path type;
process a selection of one of the subsequent recommendations from the requesting user; and
transmit an electronic product associated with the selection to the requesting user.

14. A computer program product residing on a non-transitory computer readable medium having a plurality of instructions stored thereon which, when executed by a processor, cause the processor to perform operations comprising:

processing a plurality of content portions and a plurality of opportunities associated with a recommender system;
generating a dynamic surrogate connectivity graph using the plurality of content portions and the plurality of opportunities;
processing telemetry data associated with the recommender model;
modeling a plurality of weighted path scores using the dynamic surrogate connectivity graph and the telemetry data;
providing the plurality of weighted path scores to the recommender model for generating subsequent recommendations;
sampling a plurality of subsequent recommendations generated by the recommender system using the plurality of weighted path scores by determining a number of content portions to provide for each path type by multiplying a total number of subsequent recommendations with the plurality of weighted path scores;
providing subsequent recommendations with content portions of each path type from the plurality of subsequent recommendations to a requesting user based upon, at least in part, the number of content portions for each path type;
processing a selection of one of the subsequent recommendations from the requesting user; and
transmitting an electronic product associated with the selection to the requesting user.

15. The computer program product of claim 14, wherein generating the dynamic surrogate connectivity graph includes using an opportunity-to-content portion semantic matching model to define a plurality of paths of a first path type,

wherein generating the dynamic surrogate connectivity graph preferably includes using an opportunity-to-opportunity similarity model to define a plurality of paths of a second path type, and
wherein generating the dynamic surrogate connectivity graph preferably includes a third path type using a content provider-to-content provider similarity model to define a plurality of paths of a third path type.

10

processing a plurality of content portions and a plurality of opportunities associated with a recommender system

100

generating a dynamic surrogate connectivity graph using the plurality of content portions and the plurality of opportunities

102

processing telemetry data associated with the recommender model

104

modeling a plurality of weighted path scores using the dynamic surrogate connectivity graph and the telemetry data

106

providing the plurality of weighted path scores to the recommender model for generating subsequent recommendations

108

sampling a plurality of subsequent recommendations generated by the recommender system using the plurality of weighted path scores

126

providing subsequent recommendations with content portions of each path type from the plurality of subsequent recommendations to a requesting user

128

processing a selection of one of the subsequent recommendations from the requesting user

130                          132

transmitting an electronic product associated with the selection to the requesting user

using an opportunity-to-content portion semantic matching model to define a plurality of paths of a first path type

110

using an opportunity-to-opportunity similarity model to define a plurality of paths of a second path type

112

using a content provider-to-content provider similarity model to define a plurality of paths of a third path type

114

generating a vector of mean reciprocal rank performance

116

generating a covariance matrix including the first path type, the second path type, and the third path type

118

generating an efficient frontier curve using the vector of mean reciprocal rank performance and the covariance matrix

120

receiving a selection of a point on the efficient frontier curve

122

generating the plurality of weighted path scores from the selected point on the efficient frontier curve

124

FIG. 1

EP 4 660 923 A1

CRM system
(220)

(202) (208) (214)

(204) (210) (216)

(206) (212) (218)

dynamic
surrogate
connectivity
graph
(230)

(224)

(248)

228

226

200

222

telemetry data
(238)

vector of mean
reciprocal rank
performance
(240)

covariance
matrix
(242)

efficient
frontier curve
(244)

weighted path
scores
(246)

opportunity-to-
content portion
semantic
matching
model
(232)

opportunity-to-
opportunity
similarity
model
(234)

content
provider-to-
content
provider
(236)

FIG. 2

FIG. 3

244

FIG. 4

FIG. 5

EP 4 660 923 A1

Europäisches
Patentamt
European
Patent Office
Office européen
des brevets

# EUROPEAN SEARCH REPORT

**Application Number**

EP 25 18 0738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/149484 A1 (KELLEY LAWRENCE [US]) 28 May 2015 (2015-05-28) * abstract; claims 1-21; figures 1-12 * * paragraphs [0001], [0032] - [0245] * ----- | 1-15 | INV. G06Q30/0601 |
| A | CN 113 254 550 B (ZHEJIANG DAHUA TECHNOLOGY CO) 19 April 2022 (2022-04-19) * abstract; claims 1-7; figures 1-3 * * paragraphs [0001], [0004] - [0008], [0017] - [0068] * ----- | 1-15 | |
| A | CN 110 119 478 B (NANJING UNIVERSITY OF TECHNOLOGY) 21 July 2023 (2023-07-21) * abstract; claims 1-4; figures 1-4 * * paragraphs [0001], [0006] - [0028], [0034] - [0074] * ----- | 1-15 | |
| A | Francesco Ricci ET AL: "Recommender Systems Handbook" In: "Recommender Systems Handbook", 28 October 2010 (2010-10-28), Springer, XP055260525, ISBN: 978-0-387-85820-3 pages ToC,Ch01-Ch07, * Chapters 2.2.1, 3, 4.4.2 * ----- | 1-15 | **TECHNICAL FIELDS SEARCHED (IPC)** G06Q |

The present search report has been drawn up for all claims

| Place of search | Date of completion of the search | Examiner |
|---|---|---|
| The Hague | 13 August 2025 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0738

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2025

| Patent document cited in search report | | Publication date | Patent family member(s) | | Publication date |
|---|---|---|---|---|---|
| US 2015149484 | A1 | 28-05-2015 | EP | 2876598 A1 | 27-05-2015 |
| | | | US | 2015149484 A1 | 28-05-2015 |
| CN 113254550 | B | 19-04-2022 | NONE | | |
| CN 110119478 | B | 21-07-2023 | NONE | | |

EPO FORM P0459

For more details about this annex : see Official Journal of the European Patent Office, No. 12/82